# EUROPÄISCHE PATENTSCHRIFT

(11) **EP 3 135 864 B1**
(45) Veröffentlichungstag und Bekanntmachung des Hinweises auf die Patenterteilung: **12.02.2020**
(21) Anmeldenummer: 16183865.1
(22) Anmeldetag: 11.08.2016
(51) Int. Cl.: F01D 5/08, F02C 6/08, F04D 29/32

(54) **VERDICHTER UND VERFAHREN ZUR MONTAGE EINES VERDICHTERS**
COMPRESSOR AND METHOD FOR MOUNTING A COMPRESSOR
COMPRESSEUR ET SON PROCEDE DE MONTAGE

(30) Priorität: 24.08.2015 DE 102015216110
(43) Veröffentlichungstag der Anmeldung: 01.03.2017
(73) Patentinhaber: Rolls-Royce Deutschland Ltd & Co KG, 15827 Blankenfelde-Mahlow (DE)
(72) Erfinder: LÜDDECKE, Jens, 15827 Blankenfelde-Mahlow (DE); DREVS, Steffen, 15827 Blankenfelde-Mahlow (DE)
(74) Vertreter: Maikowski & Ninnemann Patentanwälte Partnerschaft mbB

(56) Entgegenhaltungen:
- EP-A1- 2 840 230
- US-A- 4 844 694
- US-A1- 2010 266 387

## Beschreibung

Die Erfindung betrifft einen Verdichter mit den Merkmalen des Anspruchs 1 und ein Verfahren zur Montage eines Verdichters mit den Merkmalen des Anspruchs 13.

Es ist z.B. aus der DE 10 2004 006 775 A1 bekannt, Wirbelgleichrichter in Röhrenbauweise in einem Raum zwischen zwei Rotorscheiben eines Verdichters einer Gasturbine anzuordnen. Mit Hilfe von Wirbelgleichrichtern soll auf die Turbulenz der Strömung im Raum zwischen den Rotorscheiben Einfluss genommen werden.

Die EP 2 840 230 A1 beschreibt einen Rotor für eine thermische Strömungsmaschine, der ausgestaltet ist, in seinem Inneren ein Medium, beispielsweise Verdichterluft, zu führen. Zwischen zwei benachbarten Rotorscheiben ist eine Vielzahl von entlang des Umfangs verteilten Rohrleitungen zur Einleitung eines Mediums in das Rotorinnere vorgesehen, die sich jeweils radial von außen nach innen erstrecken und zwischen den Nabenbereichen der beiden Rotorscheiben befestigt sind.

Die US 4 844 694 A beschreibt eine ein Verfahren zum Befestigen von Rotorelementen einer Gasturbine.

Es besteht die Aufgabe, für Wirbelgleichrichter Bauformen zu finden, die sich insbesondere leicht montieren lassen.

Die Aufgabe wird durch einen Verdichter mit den Merkmalen des Anspruchs 1 gelöst.

Der Verdichter für eine Turbomaschine weist mindestens eine erste Rotorscheibe und mindestens eine zweite Rotorscheibe mit Verdichterschaufeln auf. Axial zwischen der mindestens einen ersten Rotorscheibe und der mindestens einen zweiten Rotorscheibe ist ein Raum angeordnet, in dem Wirbelgleichrichter angeordnet sind. Dabei sind die Wirbelgleichrichter teilweise über erste Ausnehmungen an einem ersten Bauteil und teilweise über zweite Ausnehmungen an einem dem ersten Bauteil in axialer Richtung benachbarten zweiten Bauteil formschlüssig und / oder reibschlüssig mit den Bauteilen verbunden, wobei die ersten Ausnehmungen oder zweiten Ausnehmungen an einem Haltering angeordnet sind, der mit der ersten Rotorscheibe oder der zweiten Rotorscheibe verbindbar ist oder verbunden ist. Die Wirbelgleichrichter sind mit einem Mittel zur Verdrehsicherung gekoppelt. Wenn die Wirbelgleichrichter z.B. in Röhrenbauweise ausgebildet sind, wird so ein Verdrehen in den Ausnehmungen verhindert. Dabei ist die Verdrehsicherung als jeweils ein umlaufender Ring an den Wirbelgleichrichtern ausgebildet, der mindestens eine Planfläche aufweist, die im Zusammenbau zur Ausbildung der Verdrehsicherung an eine Wandung einer Rotorscheibe oder des Halterings anstößt.

Somit werden die Wirbelgleichrichter auf zwei Seiten jeweils in Ausnehmungen angeordnet, die in unterschiedlichen Bauteilen vorgesehen sind. Die Ausnehmungen umfassen dabei jeweils einen Teil der Wirbelgleichrichter, so dass im Zusammenbau beide Ausnehmungen für eine form- und / oder reibschlüssige Verbindung sorgen. Somit können die Wirbelgleichrichter bei der Montage z.B. in eine der Ausnehmungen eingelegt werden und dann im Zusammenbau mit den anderen Ausnehmungen fixiert werden. Durch die Aufteilung der Ausnehmungen wird eine schnelle, effiziente Montage ermöglicht.

Ein Bauteil mit den Ausnehmungen kann z.B. eine erste Rotorscheibe oder ein Haltering sein. Das andere, benachbarte Bauteil kann z.B. eine zweite Rotorscheibe oder ein Bauteil z.B. als Teil des Verdichtergehäuses sein.

Durch die Verwendung eines Halterings kann eine besondere Anpassung an die Eigenschaften der Strömung innerhalb des Raumes zwischen zwei Rotorscheiben, der jeweiligen Rotorscheibenbelastung- und geometrie und / oder den Werkstoff vorgenommen werden. Der Haltering übernimmt z.B. auch zentrifugale Lasten, so dass die Rotorscheiben entlastet werden. Auch dichtet der Haltering den Raum gegenüber der Nabenkavität ab.

Vorteilhafterweise ist die Verbindung der Wirbelgleichrichter über die Ausnehmungen als Klemmverbindung ausgebildet. Dabei ist es besonders vorteilhaft, wenn die Verbindung der Wirbelgleichrichter über die Ausnehmungen als Presspassung oder Übergangspassung ausgebildet sind. Die Press- oder Übergangspassung müssen dabei nicht in den Ausnehmungen selbst vorliegen, sondern können z.B. zwischen Verbindungselementen der Rotorscheiben vorliegen.

Auch ist es vorteilhaft, wenn Formschlussmittel, insbesondere Absätze am Wirbelgleichrichter und / oder Nuten in den Rotorscheiben oder dem Haltering vorgesehen sind, um die Wirbelgleichrichter mit den Ausnehmungen formschlüssig zu verbinden oder sie dort formschlüssig zu halten. Gleichzeitig fungiert dieser Formschluss zwischen Wirbelgleichrichter und den Ausnehmungen in den Rotorscheiben und/oder dem Haltering als Verdrehsicherung für den Halterring.

In einer Ausführungsform erfolgt eine Verbindung zwischen dem Haltering und der ersten Rotorscheibe, d.h. der stromaufwärts liegenden Rotorscheibe, über eine Spiel- oder Übergangspassung. Auch ist es möglich, dass eine Verbindung zwischen dem Haltering und der zweiten Rotorscheibe, d.h. der stromabwärts liegenden Rotorscheibe, über eine Presspassung erfolgt.

In weiteren Ausführungsformen können die Passungen an die Materialien der Rotorscheiben angepasst sein. Bei Rotorscheiben unterschiedlichen Materials, insbesondere mit unterschiedlicher Steifigkeit und / oder thermischen Ausdehnungsverhaltens, kann die Verbindung des Halterings mit der Rotorscheibe mit der geringeren Steifigkeit und / dem kleineren thermischen Ausdehnungsverhaltens über eine Spielpassung erfolgen. Bei Rotorscheiben unterschiedlichen Materials, insbesondere mit unterschiedlicher Steifigkeit und / oder thermischen Ausdehnungsverhaltens, kann die Verbindung des Halterings mit der Rotorscheibe mit der höheren Steifigkeit und / dem höheren thermischen Ausdehnungsverhaltens über eine Press- oder Übergangspassung erfolgen.

Es ist vorteilhaft, wenn die Wirbelgleichrichter in Röhrenbauweise ausgebildet sind. In diesem Fall kann über die Innengeometrie der Röhre des Wirbelgleichrichters gezielt das Druckverhältnis zwischen Röhrcheneinlass und -auslass eingestellt werden.

In einer weiteren Ausgestaltung ist der Haltering über eine kraft- und / oder formschlüssige Verbindung mit der ersten Rotorscheibe verbunden, insbesondere über eine Verbindung eines umlaufenden Vorsprungs der ersten Rotorscheibe mit einer umlaufenden zweiten Nut des Halterings oder einen konischen Sitz.

Ferner ist bei mindestens einer Rotorscheibe der radial innenliegende, breitere Bereich asymmetrisch ausgebildet. Die Asymmetrie bezieht sich insbesondere auf die Mittelebene der mindestens einen Rotorscheibe.

Die Aufgabe wird auch durch eine Turbomaschine mit den Merkmalen des Anspruchs 12 und ein Verfahren mit den Merkmalen des Anspruchs 13 gelöst.

Bei dem Verfahren zur Montage eines Verdichters mit Wirbelgleichrichtern weist der Verdichter mindestens eine erste Rotorscheibe, mindestens eine zweite Rotorscheibe und einen mindestens teilweise von der mindestens einen ersten Rotorscheibe und der mindestens einen zweiten Rotorscheibe begrenzten Raum zur Aufnahme der Wirbelgleichrichter auf.

Bei der Montage werden zunächst die mindestens eine erste Rotorscheibe und ein axial benachbartes Bauteil mit Ausnehmungen bereitgestellt, wobei erste Ausnehmungen und / oder zweite Ausnehmungen an einem Haltering angeordnet sind, der mit der mindestens einen ersten Rotorscheibe und / oder der mindestens zweiten Rotorscheibe verbindbar ist oder verbunden ist.

Anschließend werden die Wirbelgleichrichter in die ersten Ausnehmungen oder die zweiten Ausnehmungen eingesetzt werden.

Dann wird entweder das axial benachbarte zweite Bauteil mit den zweiten Ausnehmungen mit dem ersten Bauteil mit den zweiten Ausnehmungen verbunden oder das erste Bauteil mit den ersten Ausnehmungen wird mit dem axial benachbarten Bauteil mit den zweiten Ausnehmungen verbunden.

Somit können die Wirbelgleichrichter zunächst in eine der Ausnehmungen eingesetzt werden, wobei anschließend die dazu komplementäre Ausnehmung mit der jeweils anderen Ausnehmung zusammengesetzt wird, so dass in jedem Fall die Wirbelgleichrichter nach der Verbindung formschlüssig und / oder kraftschlüssig über die Ausnehmungen befestigt sind.

In Zusammenhang mit den in den Figuren dargestellten Ausführungsbeispielen wird die Erfindung erläutert. Dabei zeigt
Fig. 1 eine schematische Teildarstellung einer Turbomaschine, nämlich eines Flugzeugtriebwerks mit einem Verdichter;
Fig. 2 eine Ausschnittsdarstellung einer Ausführungsform eines Verdichters während der Montage mit zwei Bauteilen (Haltering, zweite Rotorscheibe) und einem Wirbelgleichrichter in einem ersten Montagezustand;
Fig. 3 eine Ausschnittsdarstellung einer Ausführungsform eines Verdichters während der Montage mit drei Bauteilen (Haltering, erste und zweite Rotorscheibe) und einem Wirbelgleichrichter in einem zweiten Montagezustand;
Fig. 4 eine perspektivische Ansicht des ersten Montagezustands gemäß Fig. 3;
Fig. 5 eine perspektivische Ansicht des zweiten Montagezustands gemäß Fig. 4;
Fig. 6 eine perspektivische Ansicht des zweiten Montagezustands mit einer Vielzahl von Wirbelgleichrichtern;
Fig. 7 eine Schnittzeichnung durch den Befestigungsbereich eines Wirbelgleichrichters einer Ausführungsform;
Fig. 7A eine perspektivische Darstellung der Ausführungsform gemäß Fig. 7 im Teilschnitt;
Fig. 8 eine perspektivische Ansicht durch den Befestigungsbereich des Wirbelgleichrichters gemäß Fig. 7, allerdings ohne die erste Rotorscheibe.
Fig. 9 eine Explosionszeichnung zur Darstellung einer Ausführungsform des Montageverfahrens;
Fig. 10 eine weitere Ausführungsform mit einer konischen Verbindung zwischen dem Haltering und der ersten Rotorscheibe;
Fig. 10A eine perspektivische Darstellung der Ausführungsform gemäß Fig. 10 im Teilschnitt;
Fig. 11 eine weitere Ausführungsform mit einer formschlüssigen Verbindung zwischen dem Haltering und der ersten Rotorscheibe;
Fig. 11A eine perspektivische Darstellung der Ausführungsform gemäß Fig. 11 im Teilschnitt;
Fig. 12 eine weitere Ausführungsform mit kraftschlüssigen Verbindung zwischen Haltering und erster Rotorscheibe;
Fig. 13 eine weitere Ausführungsform mit einem Sprengring.

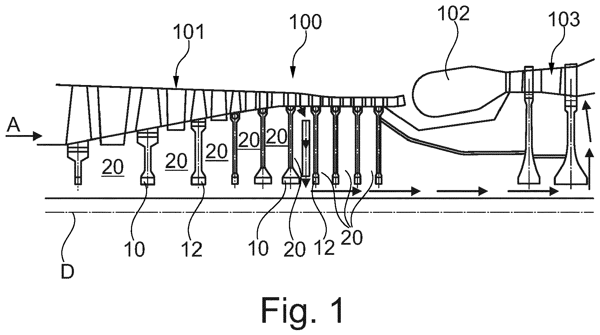

In Fig. 1 ist eine schematische Schnittansicht eines Teils einer Turbomaschine, nämlich eines Flugzeugtriebwerks 100, dargestellt. Hier wird vergrößert ein Teil eines Verdichters 101 dargestellt, der zehn Stufen aufweist. Dies bedeutet, dass zehn Rotorscheiben 10, 12 mit Verdichterschaufeln und entsprechende Statoren mit Statorschaufeln im Verdichter 101 vorgesehen sind. Zwischen zwei Rotorscheiben 10, 12 ist jeweils ein Raum 20 angeordnet, der auch als Zwischenscheibenkammer bezeichnet wird. Der Raum 20 wird somit seitlich von den Rotorscheiben 10, 12 begrenzt. Die Drehachse D des Verdichters 101 ist als strichpunktierte Linie dargestellt.

Axial in Strömungsrichtung A hinter dem Verdichter 101 liegen Brennkammern 102 und eine Turbine 103, von der in Fig. 1 nur zwei Turbinenstufen dargestellt sind.

In der hier dargestellten Ausführungsform sind in der sechsten Stufe des Verdichters 101, d.h. im sechsten Raum 20 (in Strömungsrichtung A gezählt), Wirbelgleichrichter 1 angeordnet, die hier in Röhrenbauweise ausgebildet sind. Die Wirbelgleichrichter 1 werden in an sich bekannter Weise in radialer Richtung durchströmt, wie dies in Fig. 1 schematisch durch Pfeile angedeutet ist. Im Bereich der Rotorscheibennabe gibt es eine Strömung, die in Richtung Turbine 103 gerichtet ist.

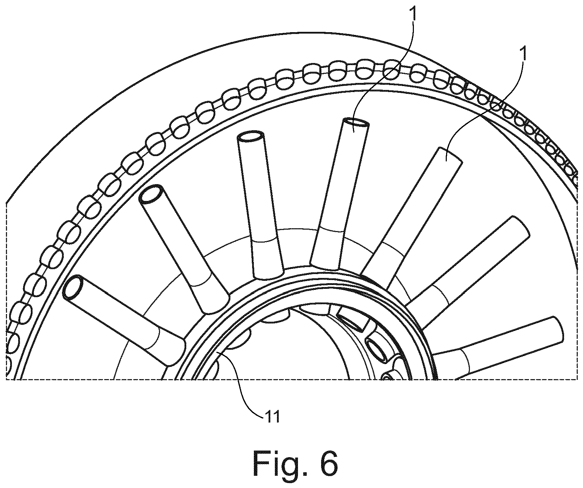

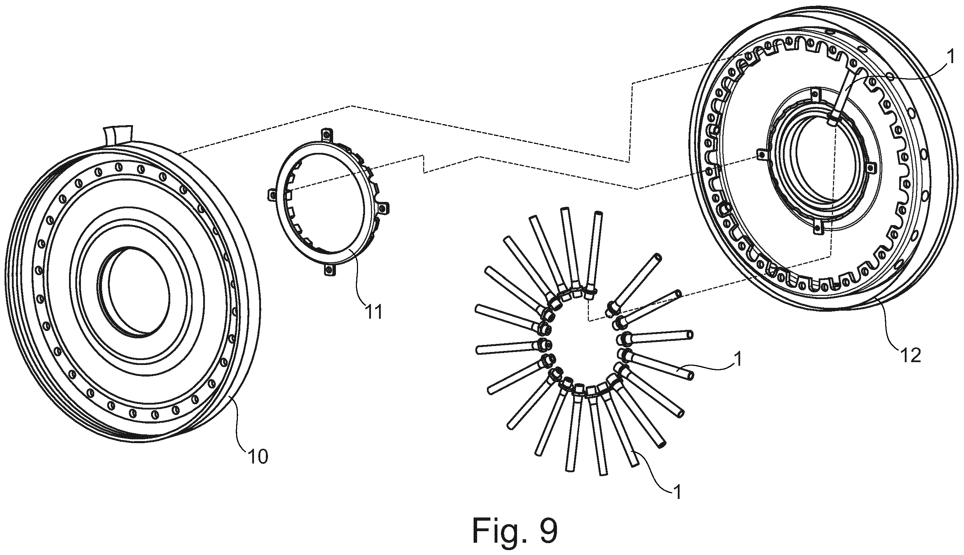

In der Fig. 1 ist auf Grund der Schnittebene nur ein Wirbelgleichrichter 1 zu erkennen. Die Wirbelgleichrichter 1 sind in dem Raum 20 in radialer Richtung angeordnet, wobei die Wirbelgleichrichter 1 in Umfangsrichtung gleichmäßig, d.h. mit gleichem Winkelabstand angeordnet sind (siehe z.B. Fig. 6 oder 9). Ein Haltering 11, der im Folgenden zwischen zwei Rotorscheiben 10, 12 angeordnet ist, wird hier aus Gründen der Einfachheit nicht dargestellt.

Der Raum 20 ist hier in axialer Richtung jeweils zwischen zwei Rotorscheiben 10, 12 angeordnet; d.h. der Raum 20 wird von den Rotorscheiben 10, 12 begrenzt. Dabei liegt eine erste Rotorscheibe 10 axial vor der zweiten Rotorscheibe 12.

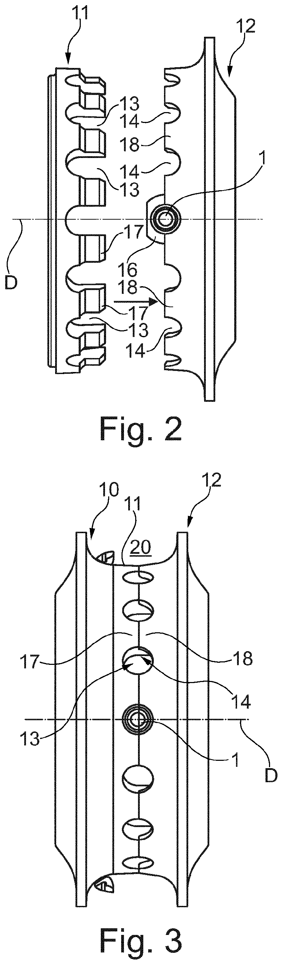

In Fig. 2 und 3 ist die Montage von Wirbelgleichrichtern 1 in einer Ausführungsform in Seitenansichten dargestellt. Dabei zeigt Fig. 2 einen ersten Montagezustand, Fig. 3 einen zeitlich späteren zweiten Montagezustand, d.h. dem Endzustand.

Dabei sind in Fig. 2 und 3 die radial inneren Bauteile, d.h. im weiteren Sinne die Nabenbereiche der Rotorscheiben 10, 12, dargestellt, wobei die erste Rotorscheibe 10 in Fig. 2 nicht dargestellt ist. Vielmehr sind erste Ausnehmungen 13 in einem Haltering als einem ersten Bauteil 11 angeordnet. Der Haltering 11 ist mit der ersten Rotorscheibe 10 verbindbar. Die erste Rotorscheibe 10 ist hier stromaufwärts der zweiten Rotorscheibe 12 angeordnet.

Der Haltering 11 weist an einer Seite am Umfang erste Ausnehmungen 13 auf. Die zweite Rotorscheibe 12 als ein zweites Bauteil weist gegenüberliegend, komplementär am Umfang zweite Ausnehmungen 14 auf. Im Zusammenbau (siehe Fig. 3) bilden die Ausnehmungen 13, 14 im Wesentlichen runde Öffnungen zur Aufnahme der Wirbelgleichrichter 1, die hier in Röhrenbauweise ausgebildet sind. In den Fig. 2 und 3 ist aus Gründen der Übersichtlichkeit nur ein Wirbelgleichrichter 1 dargestellt.

Der Haltering 11 ist hier im Übergangsbereich zwischen den Rotorscheibennabe und der sogenannten Membran (diaphragm) der Rotorscheiben 10, 12 angeordnet.

Zwischen den ersten Ausnehmungen 13 sind in Umfangsrichtung des Halterings 11 erste Vorsprünge 17 angeordnet, die in radialer Richtung konturiert sind. Die Vorsprünge 17 sind dabei an den Spitzen, die zur zweiten Rotorscheibe 12 orientiert sind, etwas flacher ausgebildet, so dass diese unter zweite Vorsprünge 18 der zweiten Rotorscheibe 12 passen. Die Stirnseite der zweiten Rotorscheibe 12 ist entsprechend komplementär ausgebildet, wie man im Zusammenbau gemäß Fig. 3 erkennen kann. Durch den Zusammenbau des Halterings 11 als erstem Bauteil mit der Rotorscheibe als zweitem Bauteil 12 entstehen durch die Ausnehmungen 13, 14 Öffnungen, in denen Wirbelgleichrichter 1 gehalten werden können.

In der zweiten Rotorscheibe 12 ist ein Wirbelgleichrichter 1 angeordnet, der nach der Montage über die Ausnehmungen 13, 14 form- und / oder reibschlüssig mit den Rotorscheiben 10, 12 verbunden ist. In Fig. 3 wird der Wirbelgleichrichter 1 stromaufwärts von der ersten Ausnehmung 13, stromabwärts von der zweiten Ausnehmung 14 umfasst.

In der hier dargestellten Ausführungsform weist der Wirbelgleichrichter 1 ein Mittel zur Verdrehsicherung 16 und zur radialen Sicherung auf. Dieses Mittel 16 ist hier als eine Scheibe ausgebildet, die auf den Seiten, die den Rotorscheiben 10, 12 zugewandt sind, jeweils eine Planfläche aufweist. Diese Planflächen liegen nach dem Einbau der röhrenförmigen Teile der Wirbelgleichrichter 1 gegen Wandungen des Halterings 11 und / oder der zweiten Rotorscheibe 12 an, so dass die Wirbelgleichrichter 1 sich beim Zusammenbau und auch danach nicht mehr in den Ausnehmungen 13, 14 verdrehen können.

Nach dem Zusammenbau dienen die in die komplementären Ausnehmungen 13, 14 eingesetzten Wirbelgleichrichter 1 als Verdrehsicherung des Halterings 11 in Umfangsrichtung und verhindern somit eine Rotation des Rings um die Achse D im Betrieb.

In axialer Richtung werden die Wirbelgleichrichter 1 durch den Formschluss und / oder Reib-/ Kraftschluss in den komplementären Ausnehmungen 13, 14 gesichert. Der Halterring 11 wird durch Form- und Kraftschluss (Reibschluss) zwischen den beiden Rotorscheiben 10, 12 in axialer Richtung gesichert.

In den Fig. 2 und 3 wird eine Ausführungsform unter Verwendung eines Halterings 11 beschrieben. Der Halterring weist u.a. eine selbsttragende Funktion auf und nimmt die Lasten der Wirbelgleichrichter 1 - erzeugt durch Zentrifugalkräfte im Betrieb - auf. Damit verringert der Haltering die Belastung der Rotorscheiben 10, 12. Zusätzlich dichtet der Haltering den Zwischenscheibenkammer 20 zum Nabenbereich hin ab und vermindert so Druckverluste im Wirbelgleichrichter 1 bzw. ermöglichte eine gezielte Beeinflussung der Druck- und Strömungscharakteristiken.

Die Dichtung erfolgt in konkreten Fall, über eine Presspassung zur Rotorscheibe 12 und eine Spielpassung zur Rotorscheibe 10. Dabei ist die Spielpassung (u.U. auch eine Übergangspassung) so ausgelegt, dass sie sich im Betrieb vollständig schließt und über den gesamten Flugzyklus den Raum 20 abdichtet.

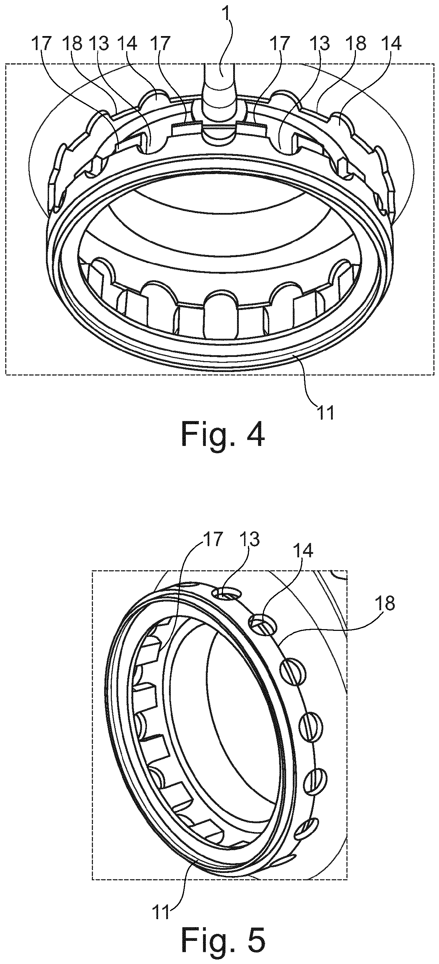

Die Fig. 4 und 5 zeigen die beiden Montagezustände einer Ausführungsform, die analog zu der in Fig. 3 und 4 dargestellten Ausführungsform ist. Hier ist ebenfalls ein Haltering 11 als ersten Bauteil mit den ersten Ausnehmungen 13 dargestellt, der mit der ersten Rotorscheibe 10 (hier nicht dargestellt) verbunden ist.

Grundsätzlich ist es aber auch möglich, dass die ersten Ausnehmungen 13 in der ersten Rotorscheibe 10 selbst angeordnet sind; die erste Rotorscheibe 10 würde dann die Funktion des ersten Bauteils 11 übernehmen.

In der Fig. 5 ist aus Gründen der Übersichtlichkeit nur ein Wirbelgleichrichter 1, in der Fig. 6 kein Wirbelgleichrichter dargestellt ist.

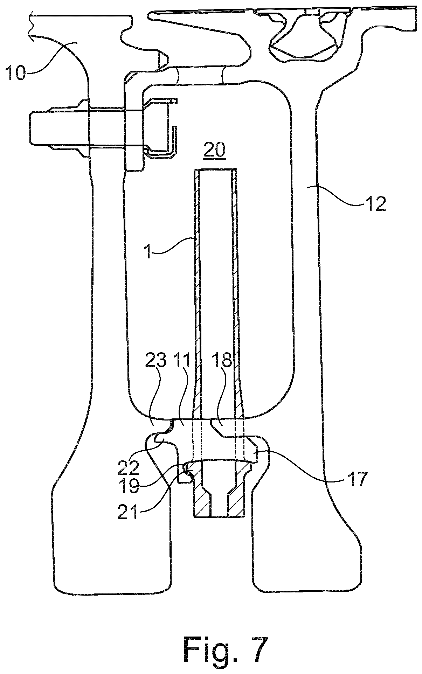

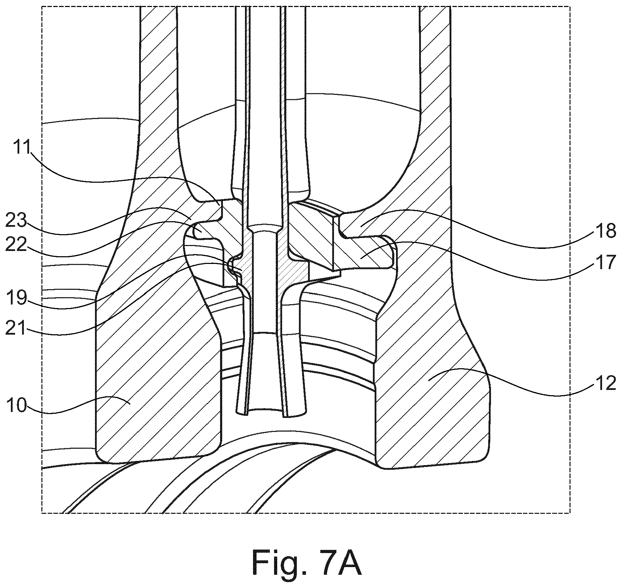

In Fig. 7 ist eine Schnittansicht durch eine Ausführungsform mit zwei Rotorscheiben 10, 12 und Wirbelgleichrichtern 1 (hier nur einer im Schnitt erkennbar) im zusammengebauten Zustand (d.h. dem zweiten Montagezustand) dargestellt. Fig. 7A zeigt die Ausführungsform in einer teilweise aufgeschnittenen dreidimensionalen Ansicht.

Dabei ist insbesondere der Nabenbereich im Detail dargestellt. Auch hier wird ein Haltering 11 als erstes Bauteil verwendet, um die ersten Ausnehmungen 13 bereitzustellen. In Fig. 7 und 7A ist insbesondere die Befestigung des Wirbelgleichrichters 1 an den Rotorscheiben 10, 12 dargestellt. Die stromaufwärts liegende erste Rotorscheibe 10 ist aus Titan gefertigt, die stromabwärts liegende zweite Rotorscheibe 12 ist aus Nickel gefertigt.

Die Verbindung des Halterings 11 an die erste Rotorscheibe 10 erfolgt über eine Übergangspassung, an die zweite Rotorscheibe 12 über eine Presspassung.

Somit besteht zwischen dem umlaufenden ersten Vorsprung 17 des Halterings 11 und dem umlaufenden zweiten Vorsprung 18 der zweiten Rotorscheibe 12 eine Presspassung. Dies bedeutet, dass die umlaufenden ersten Vorsprünge 17 des Halterings 11 unter die entsprechend geformten Gegenstücke, die umlaufenden zweiten Vorsprünge 18 der zweiten Rotorscheibe 12 im Rahmen einer Presspassung gefügt werden.

Die Verbindung des Halterings 11 mit der ersten Rotorscheibe 10 erfolgt über eine Übergangs- oder Spielpassung. Dazu weist der Haltering 11 einen umlaufenden zweiten Vorsprung 22 auf, der hier unter einen umlaufenden Vorsprung 23 (Kragarm) der ersten Rotorscheibe 10 eingreift.

Der Durchmesser des inneren Teils (d.h. das Teil mit den ersten Vorsprüngen 17) ist immer größer als die entsprechende Bohrung, d.h. das Teil mit den zweiten Vorsprüngen 18. Durch diese Presspassungsverbindung wird eine sichere axiale Verbindung zwischen den Rotorscheiben 10, 12 hergestellt.

Am radial unteren Ende des Wirbelgleichrichters 1 ist ein Absatz 19, d.h. eine Verdickung, angeordnet, der den Wirbelgleichrichter 1 radial nach außen gegen die Umrandung der Ausnehmungen 13 abstützt. Der Absatz 19 greift in eine Nut 21 des Halterrings 11 ein. Somit wird der Wirbelgleichrichter 1 in radialer Richtung festgelegt durch die Formschlussmittel der Nut 21 und des Absatzes 19. Der Absatz 19 stützt sich radial an der Unterseite des Halterings 11 ab und wird in der Nut 21 gegen ein "Herausfallen" gesichert. Die Planflächen des Absatzes 19, schlagen gegen die Nut 21 und verhindern so ein Verdrehen des Wirbelgleichrichters 1.

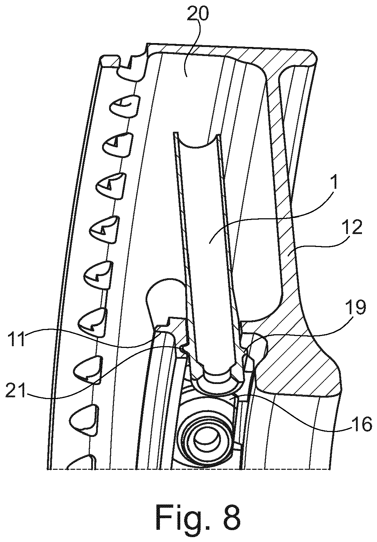

Die Situation der Fig. 7, 7A ist in der Fig. 8 nochmals in einer perspektivischen Schnittansicht dargestellt, wobei aus Gründen der Vereinfachung die erste Rotorscheibe 10 hier nicht dargestellt ist. Dabei ist ein Wirbelgleichrichter 1 im Schnitt dargestellt, der den dahinterliegenden Wirbelgleichrichter 1 teilweise verdeckt. Für diesen hinteren Wirbelgleichrichter 1 ist hier deutlich das Mittel zur Verdrehsicherung 16 erkennbar, das bereits oben beschrieben worden war.

In Fig. 9 sind in einer Explosionszeichnung die Teile der Halterung der Wirbelgleichrichter 1 dargestellt, so dass Verfahren zur Montage dargestellt werden kann.

Die Wirbelgleichrichter 1 werden hier zwischen dem Haltering 11 und der zweiten Rotorscheibe 12 gehalten. Der Haltering 11 wiederum wird mit der ersten Rotorscheibe 10 verbunden.

Die Wirbelgleichrichter 1 werden in die zweiten Ausnehmungen 14 der zweiten Rotorscheibe 12 eingesetzt. Alternativ ist es auch möglich, die Wirbelgleichrichter 1 in die ersten Ausnehmungen 13 des Halterings 11 einzusetzen.

Anschließend wird entweder die zweite Rotorscheibe 12 mit den zweiten Ausnehmungen 14 mit dem Haltering 11 mit den ersten Ausnehmungen 13 verbunden. Alternativ wird der Haltering 11 mit den ersten Ausnehmungen 13 mit dem axial benachbarten Bauteil 12 verbunden.

Anschließend wird die erste Rotorscheibe 10 mit dem Haltering 11 und der zweiten Rotorscheibe 12 verbunden.

In jedem Fall sind damit die Wirbelgleichrichter 1 nach der Verbindung formschlüssig und / oder kraftschlüssig über die Ausnehmungen 13, 14 mit den Rotorscheiben 10, 12 verbunden.

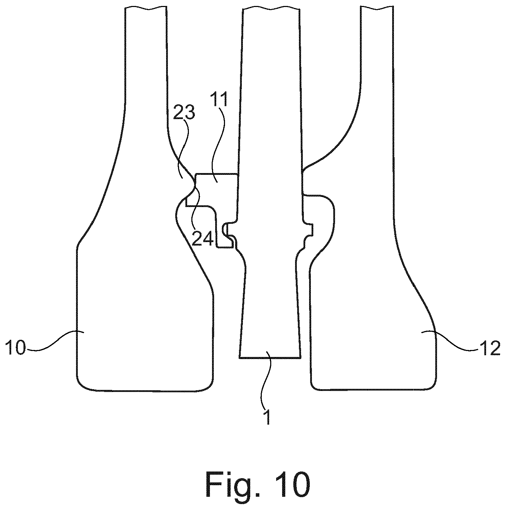

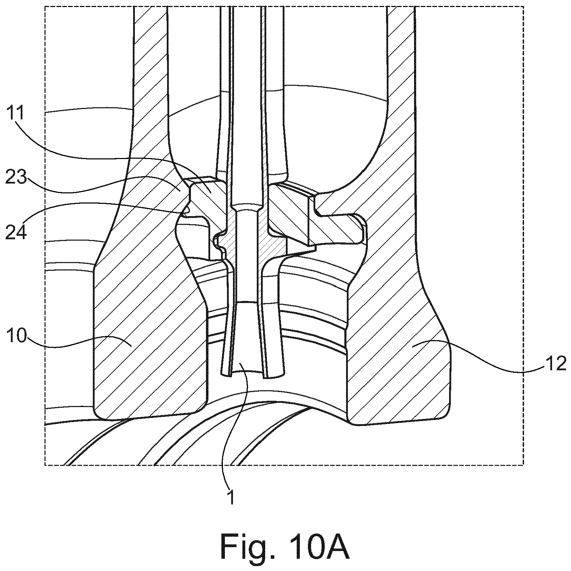

In den Fig. 10 bis 12 werden weitere Ausführungsformen dargestellt, in denen die Verbindung zwischen dem Haltering 11 und der ersten Rotorscheibe 10 variiert werden.

In der Ausführungsform gemäß Fig. 10 und 10A ist der umlaufende zweite Vorsprung 22 des Halterings 11 so ausgebildet, dass er eine umlaufende konische Form aufweist. Dieser konische Vorsprung 22 wirkt mit dem ebenfalls konisch geformten Vorsprung 23 der ersten Rotorscheibe 10 zusammen. Durch den konischen Sitz ist eine gewisse Selbstzentrierung von Haltering 11 und der ersten Rotorscheibe 10 möglich. Auch wird durch die konische Kontaktfläche eine verbesserte Dichtwirkung erreicht.

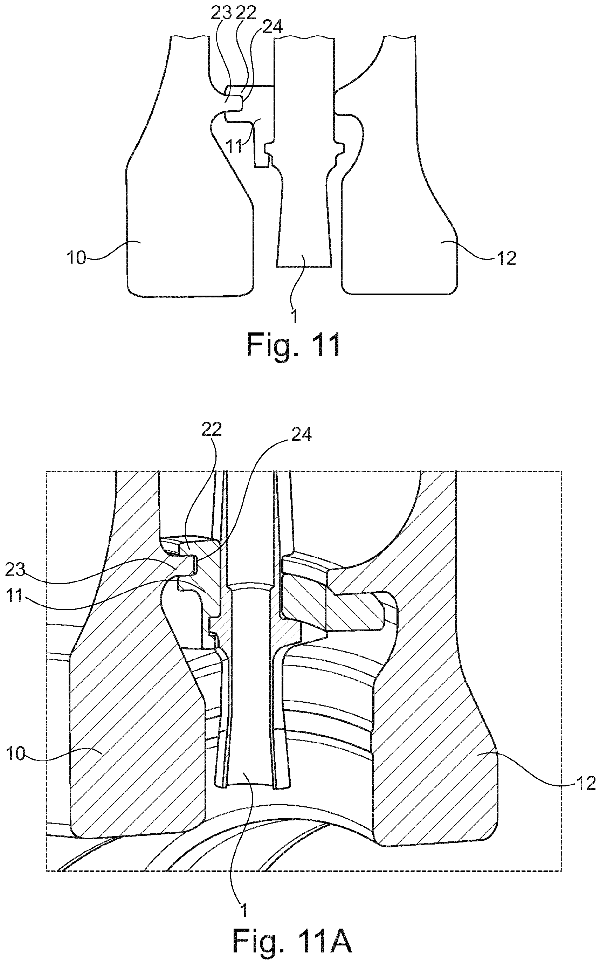

In der Ausführungsform gemäß Fig. 11 und 11A ist der Haltering 11 auf der Seite zur ersten Rotorscheibe 10 anders ausgebildet. Der Haltering weist eine umlaufende zweite Nut 24 auf, in die der umlaufende Vorsprung 23 (Kragarm) der ersten Rotorscheibe 23 angeordnet ist. Diese, auch als Vogelschnabel-Verbindung bezeichnete Ausführungsform weist auf Grund der doppelseitigen Einfassung des Vorsprungs 23 eine besondere Dichtwirkung auf.

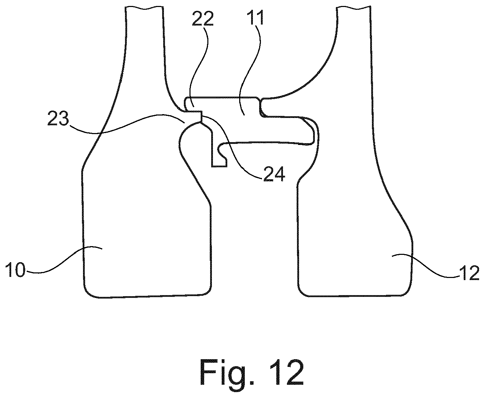

In Fig. 12 ist eine weitere Variation der Verbindung zwischen dem Haltering 11 und der ersten Rotorscheibe 10 dargestellt. Dabei liegt der zweite Vorsprung 22 des Halterings 11 über dem Vorsprung 23 (Kragarm) der ersten Rotorscheibe 10. Der Haltering 11 kann z.B. aus Titan gefertigt sein.

In den Ausführungsbeispielen wird auf umlaufende Vorsprünge oder Nuten Bezug genommen. Diese bedeutet, dass die Vorsprünge oder Nuten zumindest über Teile des Umfangs der Bauteile vorhanden sind.

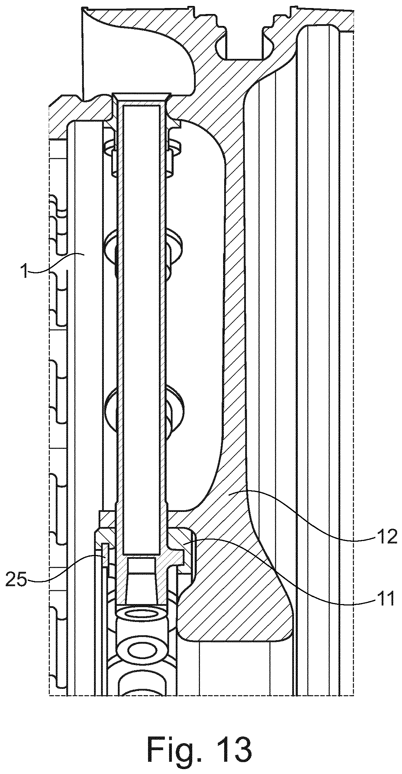

Fig. 13 ist eine Ausführungsform bei der ein Sprengring 25 dazu dient, den Wirbelgleichrichter 1 gegen eine Verdrehung zu sichern. Der Sprengring 25 ist dazu in eine radial umlaufende Nut des Halterings 11 eingesetzt.

Es sei noch darauf hingewiesen, dass die radial innenliegenden, breiteren Bereich der Rotorscheiben, insbesondere der stromaufwärtsliegenden Rotorscheibe 10 (siehe z.B. Fig. 7A, 10, 10A, 11), die sogenannten cobs asymmetrisch ausgebildet sind.

### Bezugszeichenliste

- 1: Wirbelgleichrichter

- 10: erste Rotorscheibe
- 11: erstes Bauteil, z.B. Haltering
- 12: zweites Bauteil, z.B. zweite Rotorscheibe
- 13: erste Ausnehmungen
- 14: zweite Ausnehmungen
- 15: Formschlussmittel
- 16: Mittel zur Verdrehsicherung
- 17: erster Vorsprung an erstem Bauteil, z.B. Haltering
- 18: zweiter Vorsprung an zweiter Rotorscheibe
- 19: Absatz an Wirbelgleichrichter (Formschlussmittel)
- 20: Raum angrenzend an eine Rotorscheibe des Verdichters
- 21: erste Nut an Haltering (Formschlussmittel)
- 22: zweiter Vorsprung an erstem Bauteil, z.B. Haltering
- 23: Vorsprung an erster Rotorscheibe
- 24: zweite Nut an Haltering zur Verbindung mit erster Rotorscheibe
- 25: Sprengring

- 100: Turbomaschine, Flugzeugtriebwerk
- 101: Verdichter
- 102: Brennkammer
- 103: Turbine

- A: Strömungsrichtung
- D: Drehachse des Verdichters

## Patentansprüche

1. Verdichter (101) für eine Turbomaschine (100), mit mindestens einer ersten Rotorscheibe (10), mindestens einer zweiten Rotorscheibe (12) und einem mindestens teilweise von der mindestens einen ersten Rotorscheibe (10) und der mindestens einen zweiten Rotorscheibe (12) begrenzten Raum (20), der axial zwischen der mindestens einen ersten Rotorscheibe (10) und der mindestens einen zweiten Rotorscheibe (12) angeordnet ist, wobei in dem Raum (20) Wirbelgleichrichter (1) angeordnet sind, wobei die Wirbelgleichrichter (1) teilweise über erste Ausnehmungen (13) an einem ersten Bauteil und teilweise über zweite Ausnehmungen an einem dem ersten Bauteil in axialer Richtung benachbarten zweiten Bauteil formschlüssig und / oder reibschlüssig mit den Bauteilen verbunden sind, wobei die ersten Ausnehmungen (13) oder zweiten Ausnehmungen (14) an einem Haltering (11) angeordnet sind, der mit der ersten Rotorscheibe (10) oder der zweiten Rotorscheibe (12) verbindbar ist oder verbunden ist,
**dadurch gekennzeichnet, das**
die Wirbelgleichrichter (1) mit einem Mittel zur Verdrehsicherung (16) gekoppelt sind, wobei die Verdrehsicherung (16) als jeweils ein umlaufender Ring an den Wirbelgleichrichtern (1) ausgebildet ist, der mindestens eine Planfläche aufweist, die im Zusammenbau zur Ausbildung der Verdrehsicherung (16) an eine Wandung der mindestens einen ersten Rotorscheibe (10), der mindestens einen zweiten Rotorscheibe (12) oder des Halterings (11) anstößt.

2. Verdichter nach Anspruchs 1, **dadurch gekennzeichnet, dass** die zweiten Ausnehmungen (14) in der zweiten Rotorscheibe (12) angeordnet sind.

3. Verdichter nach Anspruch 1 oder 2, **dadurch gekennzeichnet, dass** die Verbindung der Wirbelgleichrichter (1) über die Ausnehmungen (13, 14) als Klemmverbindung und / oder als Presspassung oder Übergangspassung ausgebildet ist.

4. Verdichter nach mindestens einem der vorhergehenden Ansprüche, **gekennzeichnet, durch** Formschlussmittel, insbesondere Absätze (19) am Wirbelgleichrichter (1) und / oder Nuten (21) in den Rotorscheiben (10, 12) oder dem Haltering (11) zur Verbindung der Wirbelgleichrichter (1) in den Ausnehmungen (13, 14).

5. Verdichter nach mindestens einem der vorhergehenden Ansprüche, **dadurch gekennzeichnet, dass** eine Verbindung zwischen dem Haltering (11) und der ersten Rotorscheibe (10) über eine Spiel- oder Übergangspassung erfolgt.

6. Verdichter nach mindestens einem der vorhergehenden Ansprüche, **dadurch gekennzeichnet, dass** eine Verbindung zwischen dem Haltering (11) und der zweiten Rotorscheibe (12) über eine Presspassung erfolgt.

7. Verdichter nach mindestens einem der vorhergehenden Ansprüche, **dadurch gekennzeichnet, dass** die Rotorscheiben (10, 12) aus unterschiedlichem Material ausgebildet sind, insbesondere mit unterschiedlicher Steifigkeit und / oder thermischem Ausdehnungsverhalten, wobei die Verbindung des Halterings (11) mit der Rotorscheibe (10, 12) mit der geringeren Steifigkeit und / oder dem kleineren thermischen Ausdehnungsverhalten über eine Spielpassung erfolgt.

8. Verdichter nach mindestens einem der vorhergehenden Ansprüche, **dadurch gekennzeichnet, dass** die Rotorscheiben (10, 12) aus unterschiedlichem Material ausgebildet sind, insbesondere mit unterschiedlicher Steifigkeit und / oder thermischem Ausdehnungsverhalten, wobei die Verbindung des Halterings (11) mit der Rotorscheibe (10, 12) mit der höheren Steifigkeit und / oder dem höheren thermischen Ausdehnungsverhalten über eine Press- oder Übergangspassung erfolgt.

9. Verdichter nach mindestens einem der vorhergehenden Ansprüche, **dadurch gekennzeichnet, dass** die Wirbelgleichrichter (1) in Röhrenbauweise ausgebildet sind.

10. Verdichter nach mindestens einem der vorhergehenden Ansprüche, **dadurch gekennzeichnet, dass** der Haltering (11) über eine kraft- und / oder formschlüssige Verbindung mit der ersten Rotorscheibe (10) verbunden ist, insbesondere über eine Verbindung eines umlaufenden Vorsprungs (23) der ersten Rotorscheibe (10) mit einer umlaufenden zweiten Nut (24) des Halterings (11) oder über einen konischen Sitz.

11. Verdichter nach mindestens einem der vorhergehenden Ansprüche, **dadurch gekennzeichnet, dass** mindestens eine Rotorscheibe (10, 12) feinen radial innenliegenden, breiteren Bereich aufweist, welcher asymmetrisch ausgebildet ist.

12. Turbomaschine, insbesondere Flugzeugtriebwerk mit einem Verdichter nach mindestens einem der Ansprüche 1 bis 11.

13. Verfahren zur Montage eines Verdichters mit Wirbelgleichrichtern, insbesondere für einen Verdichter nach mindestens einem der Ansprüche 1 bis 11, wobei der Verdichter mindestens eine erste Rotorscheibe (10), mindestens eine zweite Rotorscheibe (12) und einen mindestens teilweise von der mindestens einen ersten Rotorscheibe (10) und der mindestens einen zweiten Rotorscheibe (12) begrenzten Raum (20) zur Aufnahme der Wirbelgleichrichter (1) aufweist,
wobei
a) ein erstes Bauteil und ein axial benachbartes zweites Bauteil jeweils Ausnehmungen (13, 14) aufweisen, wobei erste Ausnehmungen (13) und / oder zweite Ausnehmungen (14) an einem Haltering (11) angeordnet sind, der mit der mindestens einen ersten Rotorscheibe (10) oder der mindestens einen zweiten Rotorscheibe (12) verbindbar ist oder verbunden ist,
b) die Wirbelgleichrichter (1) in die ersten Ausnehmungen (13) oder die zweiten Ausnehmungen (14) eingesetzt werden und anschließend
c) entweder das zweite Bauteil mit den zweiten Ausnehmungen (14) mit dem ersten Bauteil mit den ersten Ausnehmungen (13) verbunden wird
oder
das erste Bauteil mit den ersten Ausnehmungen (13) mit dem zweiten Bauteil mit den zweiten Ausnehmungen verbunden wird,
so dass in jedem Fall die Wirbelgleichrichter (1) nach der Verbindung formschlüssig und / oder kraftschlüssig über die Ausnehmungen (13, 14) befestigt sind,
**dadurch gekennzeichnet, dass**
die Wirbelgleichrichter (1) mit einem Mittel zur Verdrehsicherung (16) gekoppelt sind, wobei die Verdrehsicherung (16) als jeweils ein umlaufender Ring an den Wirbelgleichrichtern (1) ausgebildet ist, der mindestens eine Planfläche aufweist, die im Zusammenbau zur Ausbildung der Verdrehsicherung (16) an eine Wandung der mindestens einen ersten Rotorscheibe (10), der mindestens einen zweiten Rotorscheibe (12) oder des Halterings (11) anstößt.

## Claims

1. Compressor (101) for a turbomachine (100), having at least one first rotor disk (10), at least one second rotor disk (12) and a space (20) which is at least partially bounded by the at least one first rotor disk (10) and the at least one second rotor disk (12), and which is arranged axially between the at least one first rotor disk (10) and the at least one second rotor disk (12), swirl rectifiers (1) being arranged in the space (20), wherein the swirl rectifiers (1) are connected in a positive locking and/or frictionally locking manner to components, partially via first cutouts (13) on a first of these components and partially via second cutouts on a second of these components which is adjacent to the first component in the axial direction, wherein the first cutouts (13) or second cutouts (14) are arranged on a retaining ring (11) that can be or is connected to the first rotor disk (10) or to the second rotor disk (12),
**characterized in that**
the swirl rectifiers (1) are coupled to a twist prevention means (16), wherein the twist prevention (16) takes the form of a respective circumferential ring on the swirl rectifiers (1), this ring having at least one flat which, in the assembly, abuts against a wall of the at least one first rotor disk (10), of the at least one second rotor disk (12) or of the retaining ring (11) so as to form the twist prevention (16).

2. Compressor according to Claim 1, **characterized in that** the second cutouts (14) are arranged in the second rotor disk (12).

3. Compressor according to Claim 1 or 2, **characterized in that** the connection of the swirl rectifiers (1) via the cutouts (13, 14) takes the form of a clamped connection and/or a press fit or a transition fit.

4. Compressor according to at least one of the preceding claims, **characterized by** positive locking means, in particular shoulders (19) on the swirl rectifier (1) and/or grooves (21) in the rotor disks (10, 12) or the retaining ring (11) for connecting the swirl rectifiers (1) in the cutouts (13, 14).

5. Compressor according to at least one of the preceding claims, **characterized in that** the resulting connection between the retaining ring (11) and the first rotor disk (10) has a clearance fit or transition fit.

6. Compressor according to at least one of the preceding claims, **characterized in that** the resulting connection between the retaining ring (11) and the second rotor disk (12) has a press fit.

7. Compressor according to at least one of the preceding claims, **characterized in that** the rotor disks (10, 12) are made of different materials, in particular with different stiffnesses and/or thermal expansion behaviour, wherein the connection between the retaining ring (11) and that rotor disk (10, 12) having the lower stiffness and/or lower thermal expansion behaviour has a clearance fit.

8. Compressor according to at least one of the preceding claims, **characterized in that** the rotor disks (10, 12) are made of different materials, in particular with different stiffnesses and/or thermal expansion behaviour, wherein the connection between the retaining ring (11) and the rotor disk (10, 12) having the greater stiffness and/or greater thermal expansion behaviour has a press fit or transition fit.

9. Compressor according to at least one of the preceding claims, **characterized in that** the swirl rectifiers (1) are tubular.

10. Compressor according to at least one of the preceding claims, **characterized in that** the retaining ring (11) is connected to the first rotor disk (10) by a positive locking and/or non-positive locking connection, in particular by a connection between a circumferential projection (23) of the first rotor disk (10) and a circumferential second groove (24) of the retaining ring (11), or by a conical seat.

11. Compressor according to at least one of the preceding claims, **characterized in that** at least one rotor disk (10, 12) has a radially inner broader region which is asymmetric.

12. Turbomachine, in particular aero engine, having a compressor according to at least one of Claims 1 to 11.

13. Method for assembling a compressor with swirl rectifiers, in particular for a compressor according to at least one of Claims 1 to 11, the compressor having at least one first rotor disk (10), at least one second rotor disk (12) and a space (20), which is at least partially bounded by the at least one first rotor disk (10) and the at least one second rotor disk (12), for receiving the swirl rectifiers (1), wherein
a) a first component and an axially adjacent second component each have cutouts (13, 14), first cutouts (13) and/or second cutouts (14) being arranged on a retaining ring (11) which can be or is connected to the at least one first rotor disk (10) or the at least one second rotor disk (12),
b) the swirl rectifiers (1) are inserted into the first cutouts (13) or the second cutouts (14) and then
c) either the second component with the second cutouts (14) is connected to the first component with the first cutouts (13)
or
the first component with the first cutouts (13) is connected to the second component with the second cutouts, so that in either case once this connection has been made the swirl rectifiers (1) are secured by the cutouts (13, 14) in a positive locking manner and/or a non-positive locking manner,
**characterized in that**
the swirl rectifiers (1) are coupled to a twist prevention means (16), wherein the twist prevention (16) takes the form of a respective circumferential ring on the swirl rectifiers (1), this ring having at least one flat which, in the assembly, abuts against a wall of the at least one first rotor disk (10), of the at least one second rotor disk (12) or of the retaining ring (11) so as to form the twist prevention (16).

## Revendications

1. Compresseur (101) pour une turbomachine (100), comprenant au moins un premier disque de rotor (10), au moins un deuxième disque de rotor (12) et un espace (20) limité au moins en partie par l'au moins un premier disque de rotor (10) et l'au moins un deuxième disque de rotor (12), qui est disposé axialement entre l'au moins un premier disque de rotor (10) et l'au moins un deuxième disque de rotor (12), des redresseurs de tourbillon (1) étant disposés dans l'espace (20), les redresseurs de tourbillon (1) étant connectés positivement et/ou par friction aux composants en partie par le biais de premiers évidements (13) au niveau d'un premier composant et en partie par le biais de deuxièmes évidements au niveau d'un deuxième composant adjacent au premier composant dans la direction axiale, les premiers évidements (13) ou les deuxièmes évidements (14) étant disposés au niveau d'une bague de retenue (11) qui est ou peut être connectée au premier disque de rotor (10) ou au deuxième disque de rotor (12),
**caractérisé en ce que**
les redresseurs de tourbillon (1) sont accouplés à un moyen de fixation en rotation (16), la fixation en rotation (16) étant réalisée à chaque fois sous forme de bague circonférentielle au niveau des redresseurs de tourbillon (1), laquelle présente au moins une surface plane qui, lors de l'assemblage pour réaliser la fixation en rotation (16), bute contre une paroi de l'au moins un premier disque de rotor (10), de l'au moins un deuxième disque de rotor (12) ou de la bague de retenue (11).

2. Compresseur selon la revendication 1, **caractérisé en ce que** les deuxièmes évidements (14) sont disposés dans le deuxième disque de rotor (12).

3. Compresseur selon la revendication 1 ou 2, **caractérisé en ce que** la connexion des redresseurs de tourbillon (1) est réalisée par le biais des évidements (13, 14) sous forme de connexion par serrage et/ou sous forme d'ajustement serré ou d'ajustement à transition.

4. Compresseur selon au moins l'une quelconque des revendications précédentes, **caractérisé par** des moyens de verrouillage positif, en particulier des épaulements (19) au niveau du redresseur de tourbillon (1) et/ou des rainures (21) dans les disques de rotor (10, 12) ou au niveau de la bague de retenue (11) pour la connexion des redresseurs de tourbillon (1) dans les évidements (13, 14).

5. Compresseur selon au moins l'une quelconque des revendications précédentes, **caractérisé en ce qu'**une connexion a lieu entre la bague de retenue (11) et le premier disque de rotor (10) par le biais d'un ajustement avec jeu ou à transition.

6. Compresseur selon au moins l'une quelconque des revendications précédentes, **caractérisé en ce qu'**une connexion entre la bague de retenue (11) et le deuxième disque de rotor (12) s'effectue par le biais d'un ajustement serré.

7. Compresseur selon au moins l'une quelconque des revendications précédentes, **caractérisé en ce que** les disques de rotor (10, 12) sont réalisés à partir de matériaux différents, en particulier avec une rigidité différente et/ou un comportement de dilatation thermique différent, la connexion de la bague de retenue (11) au disque de rotor (10, 12) ayant la plus faible rigidité et/ou le plus faible comportement de dilatation thermique s'effectuant par le biais d'un ajustement avec jeu.

8. Compresseur selon au moins l'une quelconque des revendications précédentes, **caractérisé en ce que** les disques de rotor (10, 12) sont réalisés à partir de matériaux différents, en particulier avec une rigidité différente et/ou un comportement de dilatation thermique différent, la connexion de la bague de retenue (11) au disque de rotor (10, 12) ayant la plus grande rigidité et/ou le plus fort comportement de dilatation thermique s'effectuant par le biais d'un ajustement serré ou à transition.

9. Compresseur selon au moins l'une quelconque des revendications précédentes, **caractérisé en ce que** les redresseurs de tourbillon (1) sont réalisés sous forme de construction tubulaire.

10. Compresseur selon au moins l'une quelconque des revendications précédentes, **caractérisé en ce que** la bague de retenue (11) est connectée au premier disque de rotor (10) par le biais d'une connexion non positive et/ou positive, en particulier par le biais d'une connexion d'une saillie circonférentielle (23) du premier disque de rotor (10) avec une deuxième rainure circonférentielle (24) de la bague de retenue (11) ou par le biais d'un siège conique.

11. Compresseur selon au moins l'une quelconque des revendications précédentes, **caractérisé en ce qu'**au moins un disque de rotor (10, 12) présente une région plus large située radialement à l'intérieur, qui est réalisée de manière asymétrique.

12. Turbomachine, en particulier moteur d'avion, comprenant un compresseur selon au moins l'une quelconque des revendications 1 à 11.

13. Procédé de montage d'un compresseur avec des redresseurs de tourbillon, en particulier pour un compresseur selon au moins l'une quelconque des revendications 1 à 11, dans lequel le compresseur présente au moins un premier disque de rotor (10), au moins un deuxième disque de rotor (12) et un espace (20) limité au moins en partie par l'au moins un premier disque de rotor (10) et l'au moins un deuxième disque de rotor (12) pour recevoir les redresseurs de tourbillon (1),
a) un premier composant et un deuxième composant adjacent axialement présentant à chaque fois des évidements (13, 14), des premiers évidements (13) et/ou des deuxièmes évidements (14) étant disposés au niveau d'une bague de retenue (11) qui est ou peut être connectée à l'au moins un premier disque de rotor (10) ou à l'au moins un deuxième disque de rotor (12),
b) les redresseurs de tourbillon (1) étant insérés dans les premiers évidements (13) ou les deuxièmes évidements (14) et ensuite
c) soit le deuxième composant avec les deuxièmes évidements (14) étant connecté au premier composant avec les premiers évidements (13) soit
le premier composant avec les premiers évidements (13) étant connecté au deuxième composant avec les deuxièmes évidements,
de sorte que dans chaque cas les redresseurs de tourbillon (1) soient fixés, après la connexion positivement et/ou par force par le biais des évidements (13, 14),
**caractérisé en ce que**
les redresseurs de tourbillon (1) sont accouplés à un moyen de fixation en rotation (16), la fixation en rotation (16) étant réalisée à chaque fois sous forme de bague circonférentielle au niveau des redresseurs de tourillon (1), laquelle présente au moins une surface plane qui, lors de l'assemblage pour réaliser la fixation en rotation (16), bute contre une paroi de l'au moins un premier disque de rotor (10), de l'au moins un deuxième disque de rotor (12) ou de la bague de retenue (11).
